(19) **Europäisches Patentamt / European Patent Office / Office européen des brevets**

(11) **EP 1 597 555 B1**

(12) **EUROPEAN PATENT SPECIFICATION**

(45) Date of publication and mention
of the grant of the patent:
**23.01.2008 Bulletin 2008/04**

(21) Application number: **04711792.4**

(22) Date of filing: **17.02.2004**

(51) Int Cl.:
***G01M 1/12*** *(2006.01)*     ***B62D 37/00*** *(2006.01)*

(86) International application number:
**PCT/SE2004/000202**

(87) International publication number:
**WO 2004/074804 (02.09.2004 Gazette 2004/36)**

(54) **ARRANGEMENT AND METHOD FOR ESTIMATING THE HEIGHT OF THE CENTRE OF GRAVITY OF A VEHICLE**

ANORDNUNG UND VERFAHREN ZUR SCHÄTZUNG DER HÖHE DES SCHWERPUNKTS EINES FAHRZEUGS

DISPOSITIF ET PROCEDE POUR ESTIMER LA HAUTEUR DU CENTRE DE GRAVITE D'UN VEHICULE

(84) Designated Contracting States:
**AT BE BG CH CY CZ DE DK EE ES FI FR GB GR HU IE IT LI LU MC NL PT RO SE SI SK TR**

(30) Priority: **18.02.2003 SE 0300436**

(43) Date of publication of application:
**23.11.2005 Bulletin 2005/47**

(73) Proprietor: **Scania CV AB (publ)**
**151 87 Södertälje (SE)**

(72) Inventors:
- **PETTERSSON, Niklas**
  **S-117 30 Stockholm (SE)**
- **VAGSTEDT, Nils-Gunnar**
  **S-187 74 Täby (SE)**
- **LINDQVIST, Kristian**
  **S-169 73 Solna (SE)**

(56) References cited:
**DE-A1- 19 918 525**     **US-A- 5 825 284**
**US-A- 6 044 319**     **US-B1- 6 370 938**
**US-B1- 6 424 907**

**Description**

BACKGROUND TO THE INVENTION, AND STATE OF THE ART

The invention relates to an arrangement and a method for estimating the height of the centre of gravity of a vehicle according to the preambles of claims 1 and 14.

Conventional arrangements for estimating the centre of gravity usually comprise load sensors which detect load values on the wheels of the vehicle. The centre of gravity of the vehicle can be estimated on the basis of the positions of the wheels of the specific vehicle and the distribution of the vehicle's weight. Such estimation of the vehicle's centre of gravity is done in a horizontal plane and commonly achieves good precision. For freight vehicles which carry various kinds of loads, the position of the centre of gravity also needs estimating in the height direction. One way of doing such estimation is to estimate the height position of the centre of gravity as a function of the vehicle's total weight, i.e. a heavily laden vehicle will have a higher estimated centre of gravity than a less heavily laden vehicle. However, such an estimate is not always correct for freight vehicles which carry loads which vary in composition and weight distribution. For example, a vehicle will have a considerably lower centre of gravity when laden with steel plates than when laden with timber of similar weight.

US 6 370 938 refers to a method and a device for estimating the height of the centre of gravity of a vehicle. The height of the centre of gravity is here determined as a function of the speed of at least one wheel of the vehicle and the load to which the wheel is subjected when the vehicle is negotiating a bend.

US 6 044 319 in turn describes the use of signals from axle load sensors to calculate the height of the centre of gravity based on variations in the road gradients and/or the acceleration of the vehicle, which is used in a process for attenuating the yawing moment during braking of a vehicle with an anti-lock brake system, when the wheels show different coefficient of friction against the road surface. Here the extent of rocking movements of the vehicle which occur on road gradients, or during acceleration of the vehicle, may be used since they are approximately proportional to the height of the centre of gravity.

Many vehicles comprise electrically controlled stabilising systems adapted to providing the vehicle with optimum stability during operation. To be effective, such stabilising systems have to provide reliable information about a multiplicity of parameter values which are measured by sensors or estimated in some other way. One parameter which is of great importance for the functioning of such stabilising systems is the position of the vehicle's centre of gravity. Estimating the position of the centre of gravity in a horizontal plane can thus be done with good precision by means of load sensors which detect how the vehicle's weight is distributed over the vehicle's wheels. However, it is difficult to determine with correspondingly good precision the height position of the centre of gravity of a freight vehicle, since the height position can vary considerably with the composition of the cargo. Conventional stabilising systems may therefore frequently fail to fully provide a freight vehicle with optimum stability during operation.

SUMMARY OF THE INVENTION

The object of the present invention is to provide an arrangement and a method which enable better and more reliable estimation of a vehicle's centre of gravity in the height direction. Another object is that it should be possible for such estimation to be done automatically and during normal operation of the vehicle.

The objects stated above are achieved with the arrangement mentioned in the introduction which is characterised by what is indicated in characterising part of claim 1. The load values on the various wheels are measured with advantage by means of existing load sensors which, for example, measure the air pressure in air bellows which are arranged between the chassis and the vehicle's various wheelshafts or separately suspended individual wheels. The second sensor detects a parameter value which is related to the vehicle's acceleration. Supposing that the vehicle's centre of gravity is situated higher than the wheelshafts, the result during acceleration of the vehicle is an increased load on the vehicle's rear wheels relative to its front wheels. The change in the load values on the wheels is related to the amount of acceleration and the height of the centre of gravity above the wheelshafts. The height of the centre of gravity can therefore be determined on the basis of knowing the load change on the vehicle's wheels and the amount of acceleration. Retardation of a vehicle results correspondingly in an increased load on the vehicle's front wheels relative to the rear wheels. Here again, the change in the load values on the wheels is related to the amount of acceleration and the height of the centre of gravity above the wheelshafts. The second sensor may be an accelerometer which directly detects the vehicle's acceleration as a parameter value. Alternatively, the vehicle's existing sensors which measure its speed may be used. Speed is a parameter value which is related to acceleration. Acceleration can be determined on the basis of knowing at least two speed values and the difference between said speed values. The third sensor thus detects a parameter value which is related to the angle of inclination of the vehicle. Driving a vehicle with one forward wheelshaft and one rear wheelshaft uphill results in an increased load on the rear axle relative to the front axle as compared with driving on a more level running surface. The change in the load values on the wheels is related to the gradient and the height of the centre of gravity. The third sensor may be a slope sensor which detects a parameter value which is related to the vehicle's angle of inclination. Driving downhill results correspondingly in an increased load on the front axle relative to the rear axle as compared with driving on a more level running surface.

The second sensor and the third sensor thus detect two parameter values which define various states of the vehicle which cause variation in the load on the vehicle's wheels. Any change in such parameter values thus also results in a change in the load on the vehicle's wheels. The amount of load change is related to the height of the centre of gravity in the vehicle. The higher the centre of gravity of the vehicle, the more the load on the various wheels will change between the first state and the second. The amount of load change is also related to the extent to which the parameter values change. Estimating the height of the centre of gravity with good precision requires not only knowing said load values on the wheels and said parameter values but also the availability of information concerning the specific vehicle, such as the distance between its wheelshafts, etc. Such necessary geometrical values specific to the vehicle may be stored in a memory unit associated with the control unit. During normal operation of the vehicle, suitable second states in which the control unit can automatically estimate the height of the centre of gravity of the vehicle with good precision are usually relatively frequent.

The first state occurs when the vehicle's acceleration and angle of inclination are nil, the vehicle thus standing still on a level surface. Using such a first state is advantageous from several points of view. A vehicle is usually already in such a first state when cargo transshipment takes place, i.e. the vehicle will be standing still on a level surface. The load values on the wheels can therefore be determined quickly in the first state. In addition, in this situation the vehicle's total weight can be estimated as the aggregate of the load values on the wheels. The height of the centre of gravity in the vehicle's longitudinal direction is also easy to determine from knowing how the load is distributed among the vehicle's wheelshafts and from knowing the positions of the respective wheelshafts in the vehicle.

The second state is reached when a parameter value which exceeds a reference value is obtained. To estimate the height of the centre of gravity with precision, it is important that there is sufficient acceleration, retardation or gradient to ensure that a relatively large load change can be detected by the first sensors. This means that to make sure of estimating the height of the centre of gravity with good accuracy it is therefore advantageous not to do the estimation until such a parameter value exceeds a predetermined reference value.

According to one embodiment of the present invention, the control unit is adapted to initiating negative acceleration of the vehicle by braking at least one of said wheels. Merely braking certain specified wheels or wheelshafts of the vehicle may cause said change in the load values on the various wheels to become more pronounced. In braking heavy vehicles, a supplementary brake such as a retarder which only brakes the vehicle's driven wheels may be used. The height of the centre of gravity can thereby be determined with better precision than when more evenly distributed braking of the vehicle's wheels is effected. The control unit may correspondingly initiate positive acceleration of the vehicle by powering at least one of said wheels. With suitably arranged driveshafts of the vehicle it is possible correspondingly to achieve a more pronounced change in the load distribution on the wheels during acceleration so that the height of the centre of gravity can be determined with greater precision.

According to another embodiment of the present invention, the first state also occurs when the vehicle is travelling at constant speed on a level surface.

According to another embodiment of the present invention, the control unit is adapted to estimating the height of the centre of gravity on the basis of the change between the first and second states in a numerical measurement which comprises a value with at least two load values. Such a numerical measurement needs to have the characteristic of changing significantly with the height of the centre of gravity. For example, the numerical measurement may express the load distribution between two wheels of the vehicle. For example, when a vehicle is travelling on a steep gradient, there is a pronounced change in the load on said wheels between the first state and the second state. When the vehicle has a high centre of gravity, the result in this situation is a greater load change than when the vehicle has a low centre of gravity. Knowing such a numerical measurement and the gradient makes it easy for the control unit to estimate or calculate the height of the centre of gravity with great accuracy. The vehicle may comprise a tractor unit and at least one trailer. Such a trailer may be a so-called semitrailer. Other vehicle combinations may of course also be used. If the vehicle comprises a tractor unit and a trailer, the numerical measurement may express for example the load distribution between the tractor unit's wheels and the trailer's wheels. Alternatively, the numerical measurement may express the load on the tractor unit relative to the vehicle's total weight. Here again the numerical measurement will change significantly with the height of the centre of gravity.

According to another embodiment of the present invention, the control unit is adapted to automatically initiating estimation of the height of the centre of gravity when said second state is reached after at least one change in the vehicle's total weight has been identified. The first sensors detect when the vehicle's total weight changes after a cargo transshipment operation on the vehicle. It is thereupon found that a fresh estimate of the height of the centre of gravity needs to be made. During cargo transshipment, the vehicle will preferably be standing still on a level surface. The control unit will therefore find that the vehicle is in a suitable first state. When loading the vehicle with cargo has been completed, the first sensors detect the vehicle's total weight and how it is distributed over the vehicle's respective wheels. During the vehicle's operation thereafter, the control unit receives parameter values substantially continuously from the second sensor and the third sensor with a view to ascertaining when the vehicle reaches a suitable second state in which the height position of the centre of gravity can be determined. When such a suitable second state obtains, the control unit automatically estimates the height position of the centre of gravity. The second state may thus represent the vehicle travelling on a steep gradient or executing powerful braking or acceleration. Further estimates of the height of the centre of gravity may be made substantially continuously during ongoing normal operation of the vehicle. The height of the centre of gravity is preferably estimated as soon as an opportunity arises after a cargo transshipment operation. According to a further alternative the arrangement may comprise a control which allows estimation of the height of the centre of gravity to be initiated manually. This enables the driver, after a cargo transshipment operation, to initiate estimation of the height of the centre of gravity by operating the control as soon as the driver considers that the vehicle is in a suitable second state. The control may for example be a button means which has to be pressed in or a suitably shaped lever or circuit-breaker which has to be moved to an active position.

According to another embodiment of the present invention, at least one of the first sensors is adapted to detecting load values on a wheelshaft which comprises at least two wheels. Heavy vehicles frequently comprise air bellows acting between the vehicle's chassis and wheelshafts. In such cases, existing load sensors detect the pressure in the air bellows. Using such already existing first sensors makes it possible for load values on the vehicle's wheelshafts to be used for determining the average load on the shaft's individual wheels. Alternatively, first sensors may be adapted to detecting load values on all of the vehicle's wheels which are in contact with the running surface. In that case the load may be detected for each individual wheel so that the position of the centre of gravity in the vehicle's transverse direction can also be determined.

The objects stated above are also achieved with the method mentioned in the introduction which is characterised by what is indicated in the characterising part of claim 16.

BRIEF DESCRIPTION OF THE DRAWINGS

Preferred embodiments of the invention are described below by way of examples with reference to the appended drawings, in which:

Fig. 1     depicts schematically a vehicle with an arrangement according to the present invention,
Fig. 2     depicts forces and moments which act upon the vehicle in Fig. 1 when travelling uphill and
Fig. 3     depicts a flowchart of a method according to the present invention.

DETAILED DESCRIPTION OF PREFERRED EMBODIMENTS OF THE INVENTION

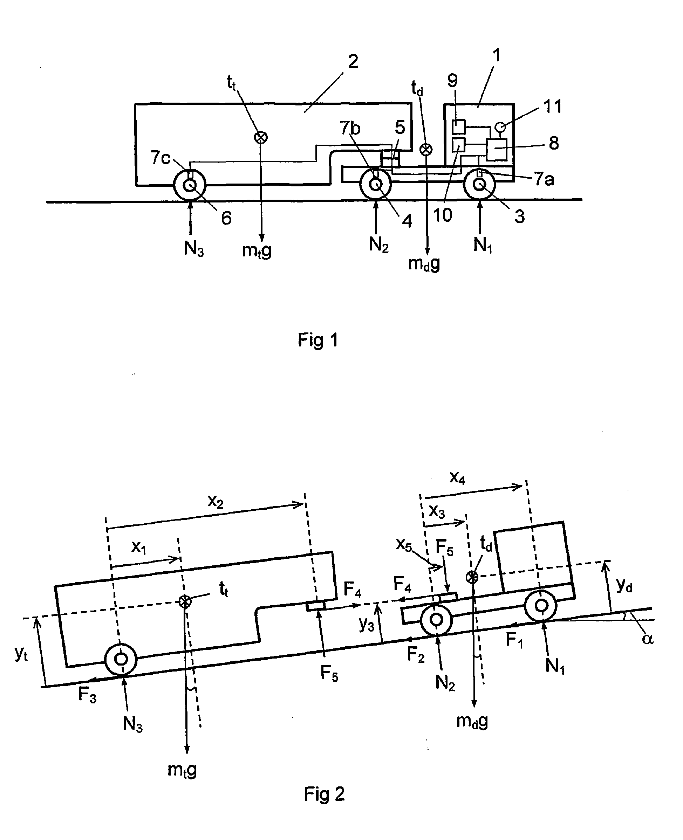

Fig. 1 depicts a vehicle combination comprising a tractor unit 1 and a trailer 2, the trailer being in this case a semitrailer. The tractor unit 1 comprises a forward wheelshaft 3 and a rear wheelshaft 4. The tractor unit comprises a turntable 5 which allows coupling to the trailer 2. The trailer 2 comprises a rear wheelshaft 6. The front portion of the trailer 2 is supported by the turntable 5. In this case, load sensors 7a-c are arranged on the vehicle's respective wheelshafts 3, 4, 6. The load sensors 7a-c detect the loads on the respective wheelshafts 3, 4, 6. The load sensors 7a-c are with advantage already existing sensors adapted to detecting the air pressure in undepicted air bellows which are arranged between the vehicle's chassis and the respective wheelshafts. Electrical lines from each of the load sensors 7a-c extend to a control unit 8 situated in the tractor unit 1. The tractor unit 8 thereby receives information substantially continuously concerning the prevailing load values on the respective wheelshafts 3, 4, 6. The vehicle also incorporates a schematically depicted slope sensor 9 which is adapted to detecting the vehicle's angle of inclination $\alpha$. The slope sensor 9 is connected to the control unit 8 by an electrical line for carrying signal values which provide information about the vehicle's angle of inclination $\alpha$. The vehicle also comprises a schematically depicted sensor 10 which detects the vehicle's speed. Such a sensor 10 may for example measure the rotation speed of the wheels. The sensor 10 may also be an already existing sensor for estimating the vehicle's speed. The control unit 8 receives information about the vehicle's speed from the sensor 10 via an electrical line and thereupon calculates a value of the vehicle's acceleration on the basis of information about the difference in speed between at least two measuring occasions close together in time. Alternatively, an accelerometer directly detecting the vehicle's acceleration may be used.

Fig. 1 shows the vehicle combination standing still on a level surface. The slope sensor 9 detects that the angle of inclination is 0° and the speed sensor 10 detects that the speed is constantly nil. Cargo transshipment usually takes place in such a state, which is therefore preferably defined as a first state. Alternatively, such a first state may obtain when the vehicle is travelling at constant speed on a level surface. In the first state, the load sensor 7a detects the perpendicular force $N_1$ which acts upon the wheelshaft 3, the load sensor 7b detects the perpendicular force $N_2$ which acts upon the wheelshaft 4, and the load sensor 7c detects the perpendicular force $N_3$ which acts upon the wheelshaft 6. The control unit 8 uses information about the values of the perpendicular forces $N_1$, $N_2$, $N_3$ to calculate the vehicle's

total weight $m_{tot}$ as the aggregate of the perpendicular forces. Thereafter the control unit 8 uses information about the values of the perpendicular forces $N_1$, $N_2$, $N_3$ and geometrical values of the specific vehicle, concerning inter alia the mutual spacing of the wheelshafts 3, 4, 6 and the turntable 5, to calculate the tractor unit's weight $m_d$ and the trailer's weight $m_t$. If the control unit 8 finds that the tractor unit's weight $m_d$ or the trailer's weight $m_t$ has changed relative to the latest estimate, this will be taken to mean that a cargo transshipment operation has taken place. Such a transshipment operation may also have changed the positions $t_t$, $t_d$ of the centres of gravity of the members of the vehicle combination. The control unit 8 therefore also calculates the new position of the tractor unit's centre of gravity $t_d$ in the longitudinal direction of the vehicle and the new position of the trailer's centre of gravity $t_t$ in the longitudinal direction of the vehicle.

When the vehicle sets off again after a cargo transhipment operation, the control unit 8 is adapted to estimating the vehicle's centres of gravity $t_t$, $t_d$ in the height direction for the tractor unit 1 and the trailer 2. Such estimation is done automatically during normal operation of the vehicle as soon as the control unit 8 receives information that a second state has been reached in which there is a significant change in the loads $N_1$, $N_2$, $N_3$ on the wheelshafts 3, 4, 6 relative to those in the first state. Such a change in the loads $N_1$, $N_2$, $N_3$ on the wheelshafts 3, 4, 6 occurs when the vehicle travels on sufficiently steep gradients or executes powerful acceleration or retardation. The amount of load change is thus related to the vehicle's angle of inclination $\alpha$ and the vehicle's acceleration a. The acceleration a may of course even assume negative values during retardation of the vehicle. The control unit 8 receives information substantially continuously from the slope sensor 9 concerning the vehicle's angle of inclination $\alpha$ and uses information from signal values from the speed sensor 10 to calculate at short intervals of time the vehicle's acceleration a. Fig. 2 shows the vehicle travelling uphill at an angle of inclination $\alpha$. In this case the angle of inclination $\alpha$ due to the gradient exceeds a reference value $\alpha_{ref}$ which is stored in the control unit 8. Such an angle of inclination $\alpha$ has been found to be sufficient to enable good estimation of the height of the centre of gravity $y_d$ of the tractor unit and the centre of gravity $y_t$ of the trailer 2. The control unit 8 uses information about the vehicle's angle of inclination $\alpha$, the change in the loads $N_1$, $N_2$, $N_3$ on the wheelshafts 3, 4, 6 relative to those in the first state, and values specific to the vehicle, such as axle spacing etc., to estimate said heights $y_d$ and $y_t$ of the centres of gravity. Estimation may also be done when the speed is constant so that there is no acceleration of the vehicle to affect the loads $N_1$, $N_2$, $N_3$ on the wheelshafts 3, 4, 6.

Fig. 2 shows the tractor unit 1 and the trailer 2 separated to enable the forces acting upon the respective members 1, 2 of the vehicle combination to be shown more clearly. To calculate the height $y_d$ of the tractor unit's centre of gravity and the height $y_t$ of the trailer's centre of gravity, it is possible, for example, to use the following mass balance equations and moment equations.

**Mass balance equations:**

Tractor unit:

$$m_d \cdot a = F_4 - F_3 - m_d \cdot g \cdot \sin(\alpha)$$
$$0 = N_1 + N_2 - F_5 - m_d \cdot g \cdot \cos(\alpha)$$

Trailer:

$$m_t \cdot a = F_4 - F_1 - F_2 - m_t \cdot g \cdot \sin(\alpha)$$
$$0 = N_3 + N_5 - m_t \cdot g \cdot \cos(\alpha)$$

**Moment equations:**

**Tractor unit:**

$$y_d \cdot m_d \cdot a = x_5 \cdot F_5 - y_3 \cdot F_4 - x_4 \cdot N_1 + x_3 \cdot m_d \cdot g \cdot \cos(\alpha) - y_d \cdot m_d \cdot g \cdot \sin(\alpha)$$

(round the rear wheel at the ground surface)

Trailer:

$$y_t \cdot m_t \cdot a = y_3 \cdot F_4 - x_2 \cdot F_5 + x_1 \cdot m_t \cdot g \cdot \cos(\alpha) - y_t \cdot m_t \cdot g \cdot \sin(\alpha)$$

(round the wheel at the ground surface)

where $y_t$ = height of trailer's centre of gravity, $y_d$ = height of tractor unit's centre of gravity, $y_3$ = height position of turntable, $m_d$ = weight of tractor unit, $m_t$ = weight of trailer, a = acceleration of vehicle, $F_{1-3}$ = braking force on respective wheelshafts, $F_{4,5}$ = force components between tractor unit and trailer at turntable, $N_{1-3}$ = perpendicular forces at respective wheelshafts, $X_{1-5}$ = spacings specific to vehicle, $\alpha$ = angle of inclination of vehicle.

This calculation model is merely an example and takes only static characteristics into account. It does not take into account dynamic characteristics such as, for example, suspension. A more sophisticated calculation model might of course also comprise dynamic characteristics.

The control unit 8 thus automatically does a calculation of the heights of the centres of gravity $y_t$, $y_d$ as soon as a suitable second state occurs during normal operation of the vehicle after a cargo transshipment operation. Such calculations may be done many times. At the same time an average value may be calculated in order to determine the heights $y_t$, $y_d$ of the centres of gravity with greater accuracy. The second state obtains when the vehicle travels on a gradient at an angle of inclination $\alpha$ which is greater than a reference value $\alpha_{ref}$. The second state may also represent the vehicle accelerating at an acceleration value a which is greater than a stored reference value $a_{ref}$, or braking of the vehicle which results in a more powerful retardation of the vehicle than a stored negative acceleration reference value $-a_{ref}$. To achieve a more pronounced load change between the wheelshafts 3, 4, 6 during such braking of the vehicle, the braking may be applied to suitably selected wheelshafts 3, 4, 6. Such braking is applied with advantage to the wheels of the forward wheelshaft 3.

The control unit 8 is thus adapted to automatic initiation of said estimation of the heights $y_t$, $y_d$ of the centres of gravity upon receiving parameter values $\alpha$, a which indicate a suitable second state has been reached after a cargo transshipment operation. As an alternative thereto or in combination therewith, the arrangement may comprise a control 11 in the vehicle's driving cab. The control is depicted schematically in Fig. 1. The driver is instructed to operate the control 11 when he/she wishes to obtain an estimate of the current heights $y_t$, $y_d$ of the centres of gravity of the members of the vehicle combination. The vehicle braking or being on a gradient at a suitable angle of inclination thus provides the driver with the opportunity to initiate estimation of the heights $y_t$, $y_d$ of the centres of gravity by operating the control 11. The control 11 may for example be a button means which has to be pressed in or a suitably shaped lever or circuit-breaker which has to be switched to an active position for such estimation to be done.

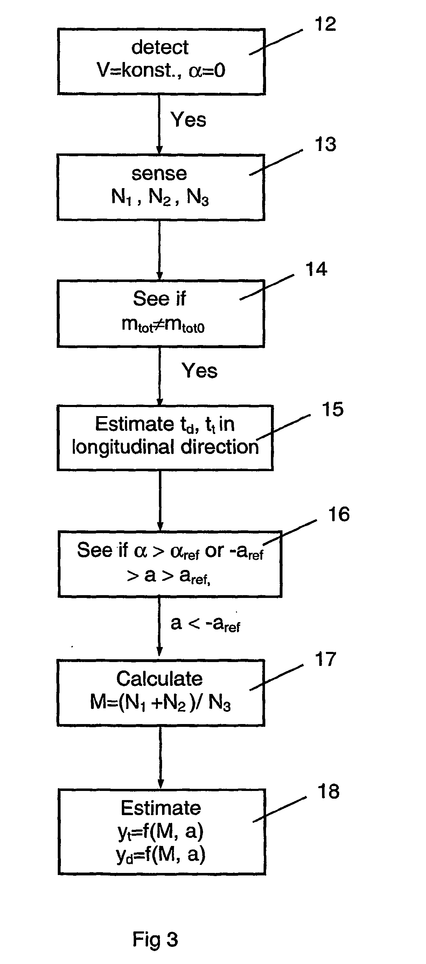

Fig. 3 depicts a flowchart illustrating an embodiment of a method according to the invention. Step 12 detects whether the vehicle is in a first state. The control unit ascertains whether the vehicle's speed is constant (i.e. v = const.) and whether the vehicle is on a level surface (i.e. $\alpha = 0$). If the vehicle is standing still, the speed is taken to be constantly nil. If said conditions are fulfilled, the load sensors 7a-c detect at step 13 the load values $N_1$, $N_2$, $N_3$ on the respective wheelshafts 3, 4, 6. At step 14, the load values are summated and the vehicle's total weight $m_{tot}$ is calculated. This is followed by comparing whether the vehicle's total weight $m_{tot}$ corresponds to the total weight $m_{tot0}$ when the heights $y_t$, $y_d$ of the centres of gravity were last estimated. If the vehicle's total weight $m_{tot}$ has changed, this may be taken to mean that a cargo transhipment operation has taken place since the last estimate of the centre of gravity. When the vehicle's load changes, the heights $y_t$, $y_d$ of the centres of gravity probably also change. At step 15, the control unit 8 uses such an indication to calculate the new position $t_d$ of the centre of gravity of the tractor unit 1 in the longitudinal direction of the vehicle and the new position $t_t$ of the centre of gravity of the trailer 2 in the longitudinal direction of the vehicle.

When the vehicle is set in motion, the control unit 8 receives parameter values substantially continuously concerning the vehicle's acceleration a and angle of inclination $\alpha$. At step 16 it then detects whether the vehicle's acceleration a exceeds the reference value $a_{ref}$ or is below a reference value $-a_{ref}$. At the same time there is detection of whether the vehicle's angle of inclination $\alpha$ is greater than a reference value $\alpha_{ref}$. As soon as either of said parameter values a, $\alpha$ passes its respective reference value, the control unit 8 is adapted to doing an estimation of the heights $y_t$, $y_d$ of the centres of gravity. In this case the vehicle effect braking at an acceleration value a which is below the reference value $-a_{ref}$, the control unit 8 finds that the vehicle is in a suitable second state, and receives prevailing load values $N_1$, $N_2$, $N_3$ from the load sensors 7a-c. Thereafter, at step 17, the control unit 8 calculates a suitable numerical measurement M which has the characteristic of significantly changing with the heights $y_t$, $y_d$ of the centres of gravity. In this case the numerical measurement is M = $(N_1, N_2)/N_3$, i.e. it denotes the load distribution between the tractor unit's wheelshafts 3, 4 and the trailer's wheelshaft 6. Other numerical measurement variants are M = $N_1/N_2$, which denotes the load distribution between the tractor unit's front axle 3 and rear axle 4, and M = $(N_1 + N_2)/ 9.81 (m_d + m_t)$, which denotes the load on the tractor unit relative to the vehicle's total weight. The numerical measurement M may also be $N_1$, $N_2$, $N_3$, i.e. the values of the various perpendicular forces.

At step 18, the control unit 8 estimates the height $y_t$ of the centre of gravity of the trailer 2 as a function of the numerical measurement M, the acceleration value a, which in this case is a negative value, and a number of geometries $x_{1-5}$ which are specific to the vehicle. The control unit 8 correspondingly estimates the height $y_d$ of the centre of gravity of the tractor unit 1 as a function of the numerical measurement M, the acceleration a and said geometries $x_{1-5}$ of the vehicle.

The invention is in no way limited to the embodiment described but may be varied freely within the scopes of the claims. The arrangement and the method may be used for estimating the height of the centre of gravity of individual vehicles and vehicle combinations of substantially any desired kind with any desired number of wheels or wheelshafts. The loads may also be detected individually for each wheel. The position of the centre of gravity in the vehicle's transverse direction may thus also be estimated. As both the vehicle's acceleration and angle of inclination affects the load on the wheels, both of these parameters need to be detected. However, the second state may represent the vehicle travelling at constant speed on a gradient. The acceleration will therefore be nil and the load change on the wheels can only be related to the vehicle's angle of inclination $\alpha$. The second state may correspondingly represent the vehicle travelling with acceleration or retardation on a level surface. The vehicle's angle of inclination will thus be nil and the load change on the wheels or wheelshafts can only be related to the vehicle's acceleration a. It is advantageous if the first state obtains when the vehicle is standing still or travelling at constant speed on a level surface. This is not necessary, however, since the first and second states may be assumed arbitrarily as long as the wheels exhibit a change of load between the said first and second states.

**Claims**

1.    An arrangement for estimating the height ($y_t$, $y_d$) of the centre of gravity of a vehicle (1, 2) which comprises a number of wheels (3, 4, 6), whereby the arrangement comprises first sensors (7a-c) adapted to detecting the loads ($N_1$, $N_2$, $N_3$) on at least two of the vehicle's wheels (3, 4, 6), a second sensor (10) adapted to detecting a parameter value which is related to the vehicle's acceleration (a) in a longitudinal direction, and a third sensor adapted to detecting a parameter value which is related to the vehicle's angle of inclination ($\alpha$) in a longitudinal direction, **characterised in that** the arrangement comprises a control unit (8) which is adapted to estimating the height ($y_t$, $y_d$) of the centre of gravity of the vehicle on the basis of information received concerning load values ($N_1$, $N_2$, $N_3$) on the vehicle's wheels (3, 4, 6) in a first state, which is reached when the vehicle stands still on a level surface after a change of the vehicle's total weight, and of information concerning said load values ($N_1$, $N_2$, $N_3$), in a second state, which is reached during the vehicle's operation thereafter when a parameter value (a, $\alpha$) is received from the second sensor (10) or the third sensor (9), which exceeds a reference value ($a_{ref}$, $\alpha_{ref}$).

2.    An arrangement according to claim 1, **characterised in that** the control unit (8) is adapted to initiating negative acceleration of the vehicle by braking at least one of said wheels (3, 4, 6).

3.    An arrangement according to claim 1 or 2, **characterised in that** the control unit is adapted to initiating positive acceleration of the vehicle by powering at least one of said wheels (3, 4, 6).

4.    An arrangement according to any one of the foregoing claims, **characterised in that** the control unit (8) is adapted to estimating the vehicle's centre of gravity ($t_t$, $t_d$) in the vehicle's longitudinal direction in said first state.

5.    An arrangement according to any one of the foregoing claims, **characterised in that** the control unit (8) is adapted to estimating the height ($y_t$, $y_d$) of the centre of gravity on the basis of the change between the first state and the second state in a numerical measurement (M) which comprises a function with at least two load values ($N_1$, $N_2$, $N_3$).

6.    An arrangement according to claim 5, **characterised in that** the numerical measurement (M) expresses the load distribution between said two wheels (3, 4) of the vehicle.

7.    An arrangement according to any one of the foregoing claims, **characterised in that** the vehicle is a freight vehicle which comprises a tractor unit (1) and at least one trailer (2).

8.    An arrangement according to claims 5 and 7, **characterised in that** the numerical measurement (M) expresses the load distribution between the tractor unit's wheels and the trailer's wheels (6).

9.    An arrangement according to claims 5 and 7, **characterised in that** the numerical measurement (M) expresses the load on the tractor unit relative to the vehicle's total weight.

10.  An arrangement according to any one of the foregoing claims, **characterised in that** the control unit (8) is adapted to initiating automatically an estimation of the prevailing height ($y_t$, $y_d$) of the centre of gravity when a change in the vehicle's total weight ($m_{tot}$) has been identified.

11. An arrangement according to any one of the foregoing claims, **characterised in that** the arrangement comprises a control (11) which enables estimation of the height ($y_t$, $y_d$) of the centre of gravity to be initiated manually.

12. An arrangement according to any one of the foregoing claims, **characterised in that** at least one of the first sensors (7a-c) is adapted to detecting load values ($N_1$, $N_2$, $N_3$) on a wheelshaft (3, 4, 6) of the vehicle which comprises at least two wheels.

13. An arrangement according to any one of the foregoing claims, **characterised in that** first sensors (7a-c) are adapted to detecting load values ($N_1$, $N_2$, $N_3$) on all of the vehicle's wheels which are in contact with the running surface.

14. A method for estimating the height ($y_t$, $y_d$) of the centre of gravity of a vehicle (1, 2) which comprises a number of wheels (3, 4, 6), whereby the method comprises the steps of detecting loads ($N_1$, $N_2$, $N_3$) on at least two of the vehicle's wheels (3, 4, 6), of detecting a parameter value which is related to the vehicle's acceleration (a) in a longitudinal direction, and of detecting a parameter value which is related to the vehicle's angle of inclination ($\alpha$) in a longitudinal direction, **characterised by** the step of estimating the height ($y_t$, $y_d$) of the vehicle's centre of gravity on the basis of information received concerning load values ($N_1$, $N_2$, $N_3$) on the vehicle's wheels (3, 4, 6) in a first state, which is reached when the vehicle stands still on a level surface after a change of the vehicle's total weight, and of information concerning said load values ($N_1$, $N_2$, $N_3$), in a second state, which is reached during the vehicle's operation thereafter when a parameter value ($a$, $\alpha$) concerning the vehicle's acceleration (a) or angle of inclination ($\alpha$) is detected, which exceeds a reference value ($a_{ref}$, $\alpha_{ref}$).

15. A method according to claim 14, **characterised by** the step of initiating negative acceleration of the vehicle by braking at least one of said wheels (3, 4, 6).

16. A method according to claim 14 or 15, **characterised by** the step of initiating positive acceleration of the vehicle by powering at least one of said wheels (3, 4, 6).

17. A method according to any one of claims 14 to 16, **characterised by** the step of estimating the vehicle's centre of gravity ($t_t$, $t_d$) in the vehicle's longitudinal direction in said first state.

18. A method according to any one of claims 14 to 17 above, **characterised by** the step of estimating the height of the centre of gravity ($y_t$, $y_d$) on the basis of the change between the first state and the second state in a numerical measurement (M) which comprises a function with at least two load values ($N_1$, $N_2$, $N_3$).

19. A method according to claim 18, **characterised by** the step that the numerical measurement (M) expresses the load distribution between said two wheels (3, 4) of the vehicle.

20. A method according to any one of claims 14 to 19 above, **characterised by** the step that the vehicle is a freight vehicle which comprises a tractor unit (1) and at least one trailer (2).

21. A method according to claims 18 and 20, **characterised by** the step that the numerical measurement (M) expresses the load distribution between the tractor unit's wheels (3,4) and the trailer's wheels (6).

22. A method according to claims 18 and 20, **characterised by** the step that the numerical measurement (M) expresses the load on the tractor unit relative to the vehicle's total weight.

23. A method according to any one of claims 14 to 22, **characterised by** the step of initiating automatically an estimate of the prevailing height ($y_t$, $y_d$) of the centre of gravity when a change in the vehicle's total weight ($m_{tot}$) has been identified.

24. A method according to any one of claims 14 to 23, **characterised by** the step of enabling manual initiation of estimation of the prevailing height ($y_t$, $y_d$) of the centre of gravity.

25. A method according to any one of claims 14 to 24, **characterised by** the step of detecting load values ($N_1$, $N_2$, $N_3$) on a wheelshaft (3, 4, 6) of the vehicle which comprises at least two wheels.

26. A method according to any one of claims 14-25, **characterised by** the step of detecting load values ($N_1$, $N_2$, $N_3$) on all of the vehicle's wheels which are in contact with the running surface.

**Patentansprüche**

1. Anordnung zum Abschätzen der Höhe ($y_t$, $y_d$) des Schwerpunkts eines Fahrzeugs (1, 2), das eine Mehrzahl an Rädern (3, 4, 6) aufweist, wobei die Anordnung erste Sensoren (7a-c), die zum Erfassen der Lasten ($N_1$, $N_2$, $N_3$) an wenigstens zwei der Fahrzeugräder (3, 4, 6) ausgelegt sind, einen zweiten Sensor (10), der zum Erfassen eines Parameterwerts ausgelegt ist, der zu der Fahrzeugbeschleunigung (a) in einer Längsrichtung in Beziehung steht, und einen dritten Sensor aufweist, der zum Erfassen eines Parameterwerts ausgelegt ist, der zu dem Neigungswinkel ($\alpha$) des Fahrzeugs in einer Längsrichtung in Beziehung steht,
**dadurch gekennzeichnet, dass** die Anordnung eine Steuereinheit (8) umfasst, die dazu ausgelegt ist, die Höhe ($y_t$, $y_d$) des Schwerpunkts des Fahrzeugs auf Grundlage von Informationen abzuschätzen, die die Lastwerte ($N_1$, $N_2$, $N_3$) an den Fahrzeugrädern (3, 4, 6) in einem ersten Zustand betreffen, der dann erreicht wird, wenn das Fahrzeug auf einer Niveaufläche nach einer Änderung des Gesamtgewichts des Fahrzeugs still steht, und basierend auf Informationen, die Lastwerte ($N_1$, $N_2$, $N_3$) in einem zweiten Zustand betreffen, der während des Fahrzeugbetriebs später erreicht wird, wenn ein Parameterwert (a, $\alpha$) von dem zweiten Sensor (10) oder dem dritten Sensor (9) erhalten wird, der einen Referenzwert ($a_{ref}$, $\alpha_{ref}$) übersteigt.

2. Anordnung nach Anspruch 1,
**dadurch gekennzeichnet, dass** die Steuereinheit (8) dazu ausgelegt ist, eine negative Beschleunigung des Fahrzeugs durch Bremsen wenigstens eines der Räder (3, 4, 6) zu veranlassen.

3. Anordnung nach Anspruch 1 oder 2,
**dadurch gekennzeichnet, dass** die Steuereinheit dazu ausgelegt ist, eine positive Beschleunigung des Fahrzeugs durch Antreiben wenigstens eines der Räder (3, 4, 6) zu veranlassen.

4. Anordnung nach einem der vorangehenden Ansprüche,
**dadurch gekennzeichnet, dass** die Steuereinheit (8) dazu ausgelegt ist, den Fahrzeugschwerpunkt ($t_t$, $t_d$) in der Fahrzeuglängsrichtung im ersten Zustand abzuschätzen.

5. Anordnung nach einem der vorangehenden Ansprüche,
**dadurch gekennzeichnet, dass** die Steuereinheit (8) dazu ausgelegt ist, die Höhe ($y_t$, $y_d$) des Schwerpunkts auf Grundlage der Änderung zwischen dem ersten Zustand und dem zweiten Zustand in einer numerischen Messung (M) abzuschätzen, die eine Funktion mit wenigstens zwei Lastwerten ($N_1$, $N_2$, $N_3$) umfasst.

6. Anordnung nach Anspruch 5,
**dadurch gekennzeichnet, dass** die numerische Messung (M) die Lastverteilung zwischen den beiden Rädern (3, 4) des Fahrzeugs beschreibt.

7. Anordnung nach einem der vorangehenden Ansprüche,
**dadurch gekennzeichnet, dass** das Fahrzeug ein Lastfahrzeug ist, das eine Zugeinheit (1) und wenigstens einen Anhänger (2) umfasst.

8. Anordnung nach Anspruch 5 und 7,
**dadurch gekennzeichnet, dass** die numerische Messung (M) die Lastverteilung zwischen den Rädern der Zugeinheit und den Rädern des Anhängers (6) beschreibt.

9. Anordnung nach Anspruch 5 und 7,
**dadurch gekennzeichnet, dass** die numerische Messung (M) die Last auf der Zugeinheit relativ zu dem Fahrzeuggesamtgewicht beschreibt.

10. Anordnung nach einem der vorangehenden Ansprüche,
**dadurch gekennzeichnet, dass** die Steuereinheit (8) dazu ausgelegt ist, automatisch eine Schätzung der herrschenden Höhe ($y_t$, $y_d$) zu veranlassen, wenn eine Änderung des Fahrzeuggesamtgewichts ($m_{tot}$) ermittelt wurde.

11. Anordnung nach einem der vorangehenden Ansprüche,
**dadurch gekennzeichnet, dass** die Anordnung eine Steuerung (11) umfasst, die es ermöglicht, dass eine Abschätzung der Höhe ($y_t$, $y_d$) des Schwerpunkts manuell initiierbar ist.

12. Anordnung nach einem der vorangehenden Ansprüche,

**dadurch gekennzeichnet, dass** wenigstens einer der ersten Sensoren (7a-c) dazu ausgelegt ist, Lastwerte ($N_1$, $N_2$, $N_3$) an einer Radachse (3, 4, 6) des Fahrzeugs zu erfassen, welche wenigstens zwei Räder umfasst.

13. Anordnung nach einem der vorangehenden Ansprüche,
    **dadurch gekennzeichnet, dass** die ersten Sensoren (7a-c) dazu ausgelegt sind, Lastwerte ($N_1$, $N_2$, $N_3$) an allen Fahrzeugrädern zu erfassen, die in Kontakt mit der Fahrbahnoberfläche stehen.

14. Verfahren zum Abschätzen der Höhe ($y_t$, $y_d$) des Schwerpunkts eines Fahrzeugs (1, 2), welches eine Mehrzahl von Rädern (3, 4, 6) aufweist, wobei das Verfahren die Schritte umfasst: Erfassen von Lasten ($N_1$, $N_2$, $N_3$) an wenigstens zwei der Fahrzeugräder (3, 4, 6), Erfassen eines Parameterwerts, der zu der Fahrzeugbeschleunigung (a) in Längsrichtung in Beziehung steht, und Erfassen eines Parameterwerts, der zu dem Neigungswinkel ($\alpha$) des Fahrzeugs in Längsrichtung im Verhältnis steht,
    **gekennzeichnet durch** den Schritt des Abschätzens der Höhe ($y_t$, $y_d$) des Fahrzeugschwerpunkts auf Grundlage der erhaltenen Informationen bezüglich der Lastwerte ($N_1$, $N_2$, $N_3$) an den Fahrzeugrädern (3, 4, 6) in einem ersten Zustand, der dann erreicht wird, wenn das Fahrzeug auf einer Niveaufläche nach einer Änderung des Fahrzeuggesamtgewichts still steht, und basierend auf Informationen bezüglich der Lastwerte ($N_1$, $N_2$, $N_3$) in einem zweiten Zustand, der während des Fahrzeugbetriebs später erreicht wird, wenn ein Parameterwert (a, $\alpha$), der die Fahrzeugbeschleunigung (a) oder den Neigungswinkel ($\alpha$) betrifft, erfasst wird, welcher einen Referenzwert ($a_{ref}$, $\alpha_{ref}$) überschreitet.

15. Verfahren nach Anspruch 14,
    **gekennzeichnet durch** den Schritt des Veranlassens einer negativen Beschleunigung des Fahrzeugs **durch** Bremsen wenigstens eines der Räder (3, 4, 6).

16. Verfahren nach Anspruch 14 oder 15,
    **gekennzeichnet durch** den Schritt des Veranlassens einer positiven Beschleunigung des Fahrzeugs **durch** Antreiben wenigstens eines der Räder (3, 4, 6).

17. Verfahren nach einem der Ansprüche 14 bis 16,
    **gekennzeichnet durch** den Schritt des Abschätzens des Fahrzeugschwerpunkts ($t_t$, $t_d$) in der Fahrzeuglängsrichtung in dem ersten Zustand.

18. Verfahren nach einem der Ansprüche 14 bis 17,
    **gekennzeichnet durch** den Schritt des Abschätzens der Höhe des Schwerpunkts ($y_t$, $y_d$) auf der Grundlage der Änderung zwischen dem ersten Zustand und dem zweiten Zustand in einer numerischen Messung (M), die eine Funktion mit wenigstens zwei Lastwerten ($N_1$, $N_2$, $N_3$) umfasst.

19. Verfahren nach Anspruch 18,
    **gekennzeichnet durch** den Schritt, dass die numerische Messung (M) die Lastverteilung zwischen den beiden Rädern (3, 4) des Fahrzeugs beschreibt.

20. Verfahren nach einem der Ansprüche 14 bis 19,
    **gekennzeichnet durch** den Schritt, dass das Fahrzeug ein Lastfahrzeug ist, das eine Zugeinheit (1) und wenigstens einen Anhänger (2) umfasst.

21. Verfahren nach Anspruch 18 und 20,
    **gekennzeichnet durch** den Schritt, dass die numerische Messung (M) die Lastverteilung zwischen den Rädern (3, 4) der Zugeinheit und den Anhängerrädern (6) beschreibt.

22. Verfahren nach Anspruch 18 und 20,
    **gekennzeichnet durch** den Schritt, dass die numerische Messung (M) die Last an der Zugeinheit relativ zu dem Fahrzeuggesamtgewicht beschreibt.

23. Verfahren nach einem der Ansprüche 14 bis 22,
    **gekennzeichnet durch** den Schritt eines automatischen Initiierens einer Abschätzung der herrschenden Höhe ($y_t$, $y_d$) des Schwerpunkts, wenn eine Änderung des Fahrzeuggesamtgewichts ($m_{tot}$) ermittelt wurde.

24. Verfahren nach einem der Ansprüche 14 bis 23,

**gekennzeichnet durch** den Schritt des Ermöglichens einer manuellen Einleitung einer Abschätzung der herrschenden Höhe ($y_t$, $y_d$) des Masseschwerpunkts.

**25.** Verfahren nach einem der Ansprüche 14 bis 24, **gekennzeichnet durch** den Schritt einer Erfassung von Lastwerten ($N_1$, $N_2$, $N_3$) an einer Radachse (3, 4, 6) des Fahrzeugs, die wenigstens zwei Räder umfasst.

**26.** Verfahren nach einem der Ansprüche 14 bis 25, **gekennzeichnet durch** den Schritt des Erfassens von Lastwerten ($N_1$, $N_2$, $N_3$) an allen Fahrzeugrädern, die in Kontakt mit der Fahrbahnoberfläche stehen.

**Revendications**

**1.** Agencement pour l'estimation de la hauteur ($y_t$, $y_d$) du centre de gravité d'un véhicule (1, 2) qui comprend un certain nombre de roues (3, 4, 6), l'agencement comprenant des premiers capteurs (7a-c) conçus pour détecter les charges ($N_1$, $N_2$, $N_3$) sur au moins deux des roues (3, 4, 6) du véhicule, un deuxième capteur (10) conçu pour détecter une valeur de paramètre qui est associée à l'accélération (a) du véhicule dans une direction longitudinale, et un troisième capteur conçu pour détecter une valeur de paramètre qui est associée à l'angle d'inclinaison ($\alpha$) du véhicule dans une direction longitudinale, **caractérisé en ce que** l'agencement comprend une unité de commande (8) qui est conçue pour estimer la hauteur ($y_t$, $y_d$) du centre de gravité du véhicule en fonction d'informations reçues concernant les valeurs de charges ($N_1$, $N_2$, $N_3$) sur les roues (3, 4, 6) du véhicule dans un premier état, qui est atteint lorsque le véhicule s'immobilise sur une surface de niveau après un changement du poids total du véhicule, et d'informations concernant lesdites valeurs de charges ($N_1$, $N_2$, $N_3$) dans un second état, qui est atteint lors de la conduite ultérieure du véhicule, lorsqu'il est reçu du deuxième capteur (10) ou du troisième capteur (9) une valeur de paramètre (a, $\alpha$) qui excède une valeur de référence ($a_{ref}$, $\alpha_{ref}$).

**2.** Agencement selon la revendication 1, **caractérisé en ce que** l'unité de commande (8) est conçue pour démarrer une accélération négative du véhicule en freinant au moins l'une desdites roues (3, 4, 6).

**3.** Agencement selon la revendication 1 ou 2, **caractérisé en ce que** l'unité de commande est conçue pour démarrer une accélération positive du véhicule en propulsant au moins l'une desdites roues (3, 4, 6).

**4.** Agencement selon l'une quelconque des revendications précédentes, **caractérisé en ce que** l'unité de commande (8) est conçue pour estimer le centre de gravité ($t_t$, $t_d$) du véhicule dans la direction longitudinale du véhicule, dans ledit premier état.

**5.** Agencement selon l'une quelconque des revendications précédentes, **caractérisé en ce que** l'unité de commande (8) est conçue pour estimer la hauteur ($y_t$, $y_d$) du centre de gravité en fonction du changement, entre le premier et le second état, d'une mesure numérique (M) qui comprend une fonction avec au moins deux valeurs de charges ($N_1$, $N_2$, $N_3$).

**6.** Agencement selon la revendication 5, **caractérisé en ce que** la mesure numérique (M) exprime la distribution de la charge entre lesdites deux roues (3, 4) du véhicule.

**7.** Agencement selon l'une quelconque des revendications précédentes, **caractérisé en ce que** le véhicule est un véhicule de transport de marchandise qui comprend une unité formant tracteur (1) et au moins une remorque (2).

**8.** Agencement selon les revendications 5 et 7, **caractérisé en ce que** la mesure numérique (M) exprime la distribution de la charge entre les roues de l'unité formant tracteur et les roues (6) de la remorque.

**9.** Agencement selon les revendications 5 et 7, **caractérisé en ce que** la mesure numérique (M) exprime la charge sur l'unité formant tracteur par rapport au poids total du véhicule.

**10.** Agencement selon l'une quelconque des revendications précédentes, **caractérisé en ce que** l'unité de commande (8) est conçue pour démarrer automatiquement une estimation de la hauteur dominante ($y_t$, $y_d$) du centre de gravité lorsqu'un changement du poids total du véhicule ($m_{tot}$) a été identifié.

**11.** Agencement selon l'une quelconque des revendications précédentes, **caractérisé en ce qu'**il comprend une commande (11) qui permet un démarrage manuel de l'estimation de la hauteur ($y_t$, $y_d$) du centre de gravité.

**12.** Agencement selon l'une quelconque des revendications précédentes, **caractérisé en ce qu'**au moins l'un des premiers capteurs (7a-c) est conçu pour détecter les valeurs de charges ($N_1$, $N_2$, $N_3$) sur un essieu (3, 4, 6) du véhicule qui comprend au moins deux roues.

**13.** Agencement selon l'une quelconque des revendications précédentes, **caractérisé en ce que** les premiers capteurs (7a-c) sont conçus pour détecter les valeurs de charges ($N_1$, $N_2$, $N_3$) sur toutes les roues du véhicule qui sont en contact avec la surface de roulement.

**14.** Procédé d'estimation de la hauteur ($y_t$, $y_d$) du centre de gravité d'un véhicule (1, 2) qui comprend un certain nombre de roues (3, 4, 6), le procédé comprenant les étapes qui consistent à : détecter les charges ($N_1$, $N_2$, $N_3$) sur au moins deux des roues (3, 4, 6) du véhicule ; détecter une valeur de paramètre qui est associée à l'accélération (a) du véhicule dans une direction longitudinale ; et détecter une valeur de paramètre qui est associée à l'angle d'inclinaison ($\alpha$) du véhicule dans une direction longitudinale, **caractérisé par** l'étape consistant à estimer la hauteur ($y_t$, $y_d$) du centre de gravité du véhicule en fonction d'informations reçues concernant les valeurs de charges ($N_1$, $N_2$, $N_3$) sur les roues (3, 4, 6) du véhicule dans un premier état, qui est atteint lorsque le véhicule s'immobilise sur une surface de niveau après un changement du poids total du véhicule, et d'informations concernant lesdites valeurs de charges ($N_1$, $N_2$, $N_3$) dans un second état, qui est atteint lors de la conduite ultérieure du véhicule, lorsqu'il est reçu du deuxième capteur (10) ou du troisième capteur (9) une valeur de paramètre (a, $\alpha$) qui excède une valeur de référence ($a_{ref}$, $\alpha_{ref}$).

**15.** Procédé selon la revendication 14, **caractérisé par** l'étape consistant à démarrer une accélération négative du véhicule en freinant au moins l'une desdites roues (3, 4, 6).

**16.** Procédé selon la revendication 14 ou 15, **caractérisé par** l'étape consistant à démarrer une accélération positive du véhicule en propulsant au moins l'une desdites roues (3, 4, 6).

**17.** Procédé selon l'une quelconque des revendications 14 à 16, **caractérisé par** l'étape consistant à estimer le centre de gravité ($t_t$, $t_d$) du véhicule dans la direction longitudinale du véhicule, dans ledit premier état.

**18.** Procédé selon l'une quelconque des revendications 14 à 17 ci-dessus, **caractérisé par** l'étape consistant à estimer la hauteur ($y_t$, $y_d$) du centre de gravité en fonction du changement, entre le premier et le second état, d'une mesure numérique (M) qui comprend une fonction avec au moins deux valeurs de charges ($N_1$, $N_2$, $N_3$).

**19.** Procédé selon la revendication 18, **caractérisé par** l'étape dans laquelle la mesure numérique (M) exprime la distribution de la charge entre lesdites deux roues (3, 4) du véhicule.

**20.** Procédé selon l'une quelconque des revendications 14 à 19 ci-dessus, **caractérisé par** l'étape dans laquelle le véhicule est un véhicule de transport de marchandise qui comprend une unité formant tracteur (1) et au moins une remorque (2).

**21.** Procédé selon les revendications 18 et 20, **caractérisé par** l'étape dans laquelle la mesure numérique (M) exprime la distribution de la charge entre les roues (3, 4) de l'unité formant tracteur et les roues (6) de la remorque.

**22.** Procédé selon les revendications 18 et 20, **caractérisé par** l'étape dans laquelle la mesure numérique (M) exprime la charge sur l'unité formant tracteur par rapport au poids total du véhicule.

**23.** Agencement selon l'une quelconque des revendications 14 à 22, **caractérisé par** l'étape consistant à démarrer automatiquement une estimation de la hauteur dominante ($y_t$, $y_d$) du centre de gravité lorsqu'un changement du poids total du véhicule ($m_{tot}$) a été identifié.

**24.** Agencement selon l'une quelconque des revendications 14 à 23, **caractérisé par** l'étape consistant à permettre un démarrage manuel de l'estimation de la hauteur dominante ($y_t$, $y_d$) du centre de gravité.

**25.** Agencement selon l'une quelconque des revendications 14 à 24, **caractérisé par** l'étape consistant à détecter les valeurs de charges ($N_1$, $N_2$, $N_3$) sur un essieu (3, 4, 6) du véhicule qui comprend au moins deux roues.

**26.** Agencement selon l'une quelconque des revendications 14 à 25, **caractérisé par** l'étape consistant à détecter les valeurs de charges ($N_1$, $N_2$, $N_3$) sur toutes les roues du véhicule qui sont en contact avec la surface de roulement.

**Fig 1**

**Fig 2**

**Fig 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6370938 B

- US 6044319 A